(19) **Europäisches Patentamt**

**European Patent Office**

**Office européen des brevets**

(11) **EP 0 871 019 B1**

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(51) Int Cl.:
***G01F 23/296*** *(2006.01)*

(21) Anmeldenummer: **98106074.2**

(22) Anmeldetag: **02.04.1998**

(54) **Verfahren und Anordnung zur Feststellung einer Überfüllung bei der Messung des Füllstands einer Flüssigkeit in einem Behälter nach dem Impulslaufzeitverfahren**

Method and device for detecting overflow in a measuring device of a level in a container according to the pulse transit time method

Procédé et dispositif pour la détection d'un remplissage excessif à une mesure de niveau d'un liquide dans un récipient selon le procédé du temps de transit des impulsions

(84) Benannte Vertragsstaaten:
**DE FR GB IT**

(30) Priorität: **10.04.1997 DE 19714973**

(43) Veröffentlichungstag der Anmeldung:
**14.10.1998 Patentblatt 1998/42**

(73) Patentinhaber: **Endress + Hauser GmbH + Co. KG
79689 Maulburg (DE)**

(72) Erfinder:
• **Getman, Igor, Prof. Dr.
79540 Lörrach (DE)**
• **Müller, Roland
79585 Steinen (DE)**
• **Lopatin, Sergej, Dr.
79539 Lörrach (DE)**

(74) Vertreter: **Andres, Angelika Maria et al
Endress + Hauser (Deutschland) Holding GmbH,
PatServe
Colmarer Strasse 6
79576 Weil am Rhein (DE)**

(56) Entgegenhaltungen:
| | |
|---|---|
| EP-A- 0 459 755 | EP-A- 0 766 070 |
| EP-A- 0 766 071 | EP-A- 0 769 682 |
| DE-A- 3 438 045 | DE-C- 4 320 411 |
| GB-A- 1 473 840 | |

**Beschreibung**

Die Erfindung betrifft ein Verfahren zur Feststellung einer Überfüllung bei der Messung des Füllstands einer Flüssigkeit in einem Behälter nach dem Impulslaufzeitverfahren mittels eines Ultraschallwandlers, der oberhalb des höchsten zulässigen Füllstands im Behälter montiert und so ausgebildet ist, daß er bei Erregung durch einen Wechselspannungsimpuls während eines Sendezeitintervalls einen Ultraschall-Sendeimpuls zur Füllgutoberfläche hin aussendet und in einem sich an das Sendezeitintervall anschließenden Empfangszeitintervall den an der Füllgutoberfläche reflektierten Ultraschall-Echoimpuls empfängt und in ein elektrisches Empfangssignal umwandelt, das an den Anschlüssen des Ultraschallwandlers abegegeben wird, wobei der Füllstand im Behälter aus der Laufzeit des Ultraschallimpulses vom Sendezeitpunkt des Ultraschall-Sendeimpulses bis zum Empfangszeitpunkt des Ultraschall-Echoimpulses ermittelt wird.

Die Erfindung betrifft ferner eine Anordnung zur Durchführung dieses Verfahrens.

Ein Verfahren dieser Art ist beispielsweise aus der DE 34 38 045 C2 bekannt. In dieser Druckschrift ist auch erläutert, daß der vom Ultraschallwandler erzeugte Ultraschall-Sendeimpuls nach dem Ende des erregenden Wechselspannungsimpulses nicht sofort aufhört, sondern wegen des Nachschwingens des Ultraschallwandlers mit abnehmender Amplitude allmählich ausklingt. Diese Erscheinung hat insbesondere zur Folge, daß Echoimpulse, die aus sehr kurzer Entfernung noch innerhalb der Ausklingzeit eintreffen, nicht ausgewertet werden können. Mit diesem Verfahren kann daher der Zustand einer Überfüllung, in welchem der Füllstand im Behälter den Ultraschallwandler erreicht hat, nicht angezeigt werden. Zur Feststellung einer solchen Überfüllung muß ein zusätzlicher Sensor nach Art eines Füllstandsgrenzschalters am Behälter angebracht werden.

Aufgabe der Erfindung ist die Schaffung eines Verfahrens, mit dem bei der Messung des Füllstands einer Flüssigkeit nach dem Impulslaufzeitverfahren eine Überfüllung ohne zusätzlichen Sensor festgestellt werden kann.

Diese Aufgabe wird nach der Erfindung dadurch gelöst, daß das durch das Nachschwingen des Ultraschallwandlers nach dem Ende des Wechselspannungsimpulses erzeugte abklingende Ausgangssignal des Ultraschallwandlers ausgewertet wird, um festzustellen, ob der Ultraschallwandler von der Flüssigkeit bedeckt ist oder nicht.

Die Wirkung des erfindungsgemäßen Verfahrens beruht darauf, daß das Nachschwingen des Ultraschallwandlers wegen der besseren Ankopplung an Flüssigkeiten wesentlich schneller abklingt, wenn er in eine Flüssigkeit eintaucht, als wenn er in Luft schwingt. Die Geschwindigkeit des Abklingens kann auf verschiedene Weisen festgestellt werden.

Eine erste Weise besteht darin, daß die Dauer des Nachschwingens des Ultraschallwandlers bis zum Abfall auf einen vorbestimmten Amplitudenwert mit einem vorgegebenen Zeitgrenzwert verglichen wird, der so bemessen ist, daß er unterschritten wird, wenn der Ultraschallwandler von der Flüssigkeit bedeckt ist.

Eine zweite Weise besteht darin, daß die Nachschwingamplitude des Ausgangssignals des Ultraschallwandlers in einem vorbestimmten Zeitpunkt nach dem Ende des Wechselspannungsimpulses mit einem vorgegebenen Schwellenwert verglichen wird, der so bemessen ist, daß er unterschritten wird, wenn der Ultraschallwandler von der Flüssigkeit bedeckt ist.

Eine dritte Weise besteht darin, daß die Nachschwingamplitude des Ausgangssignals des Ultraschallwandlers in einem vorbestimmten Zeitfenster nach dem Ende des Wechselspannungsimpulses integriert wird, und daß der Integrationswert mit einem vorgegebenen Schwellenwert verglichen wird, der so bemessen ist, daß er unterschritten wird, wenn der Ultraschallwandler von der Flüssigkeit bedeckt ist.

In jedem Fall wird das durch das Nachschwingen des Ultraschallwandlers erzeugte abklingende Ausgangssignal, das bei der Füllstandsmessung nach dem Impulslaufzeitverfahren störend und unerwünscht ist, zur Erkennung einer Überfüllung ausgenutzt. Dies erfordert keinen zusätzlichen Sensor, sondern nur eine zusätzliche Signalverarbeitung in der Erregungs- und Auswerteschaltung, die mit geringem Schaltungsaufwand durchführbar ist. Von besonderem Vorteil ist die Tatsache, daß am Behälter selbst keine Änderung vorgenommen werden muß.

Eine Anordnung zur Durchführung des zuvor angegebenen Verfahrens mit einem Ultraschallwandler, der oberhalb des höchsten zulässigen Füllstands in einem Behälter montierbar und so ausgebildet ist, daß er bei Erregung durch einen Wechselspannungsimpuls während eines Sendezeitintervalls einen Ultraschall-Sendeimpuls zur Füllgutoberfläche hin aussendet und in einem sich an das Sendezeitintervall anschließenden Empfangszeitintervall den an der Füllgutoberfläche reflektierten Ultraschall-Echoimpuls empfängt und in ein elektrisches Empfangssignal umwandelt, das an den Anschlüssen des Ultraschallwandlers abgegeben wird, und mit einer Erregungs- und Auswerteschaltung, die einen Sendeimpulsgenerator zum Anlegen eines Wechselspannungsimpulses an den Ultraschallwandler in jedem Sendezeitintervall und eine Meßschaltung zur Ermittlung der Laufzeit der Ultraschallimpulse aus den vom Ultraschallwandler gelieferten elektrischen Empfangssignalen und zur Berechnung des Füllstandes aus der ermittelten Laufzeit enthält, ist nach der Erfindung dadurch gekennzeichnet, daß die Erregungs- und Auswerteschaltung eine Prüfschaltung enthält, die das durch das Nachschwingen des Ultraschallwandlers nach dem Ende des Wechselspannungsimpulses erzeugte abklingende Ausgangssignal des Ultraschallwandlers auswertet, um festzustellen, ob der Ultraschallwandler von der Flüssigkeit bedeckt ist oder nicht.

Vorteilhafte Ausgestaltungen und Weiterbildungen der Anordnung nach der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigen:

Fig. 1    eine schematische Darstellung einer Anordnung zur Füllstandsmessung nach dem Impulslaufzeitverfahren,

Fig. 2    eine Schnittansicht eines piezoelektrischen Ultraschallwandlers, der in der Anordnung von Figur 1 verwendet werden kann,

Fig. 3    das Blockschaltbild einer Ausführungsform der Erregungs- und Auswerteschaltung in der Anordnung von Fig. 1 und

Fig. 4    Zeitdiagramme von Signalen zur Erläuterung des erfindungsgemäßen Verfahrens.

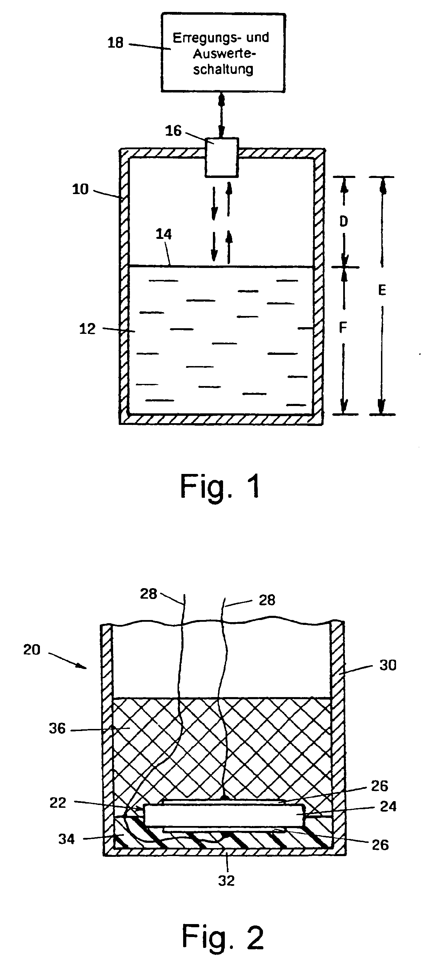

Fig. 1 zeigt einen Behälter 10, der bis zu einer Höhe F mit einer Flüssigkeit 12 gefüllt ist. Die Höhe F, in der sich die Oberfläche 14 der Flüssigkeit 12 über dem Boden des Behälters 10 befindet, ist der momentane Füllstand im Behälter. Zur Messung des Füllstands ist an der Oberseite des Behälters 10 ein Sensor 16 angebracht, der so ausgebildet ist, daß er Ultraschallimpulse zur Oberfläche der Flüssigkeit 12 hin aussenden und die von der Flüssigkeitsoberfläche 14 reflektierten Echoimpulse empfangen kann. Der Sensor 16 ist mit einer Erregungs- und Auswerteschaltung 18 verbunden, die in vorbestimmten Sendezeitintervallen jeweils einen elektrischen Wechselspannungsimpuls an den Sensor 16 anlegt, wodurch dieser zur Aussendung eines Ultraschall-Sendeimpulses angeregt wird. In einem sich an jedes Sendezeitintervall anschließenden Empfangszeitintervall wandelt der Sensor 16 eintreffende Ultraschallsignale in elektrische Wechselspannungssignale um, die der Erregungs- und Auswerteschaltung 18 zugeführt werden. Zu diesen empfangenen Ultraschallsignalen gehört inbesondere der an der Flüssigkeitsoberfläche reflektierte Ultraschall-Echoimpuls. Die Erregungs- und Auswerteschaltung 18 ermittelt die Laufzeit der Ultraschallimpulse vom Sensor 16 zur Flüssigkeitsoberfläche 14 und zurück zum Sensor 16, die gleich dem Zeitabstand zwischen der Aussendung eines Sendeimpulses und dem Empfang des an der Flüssigkeitsoberfläche reflektierten Echoimpulses ist. Aus der ermittelten Impulslaufzeit und der bekannten Schallgeschwindigkeit in Luft berechnet die Erregungs- und Auswerteschaltung 16 den Abstand zwischen dem Sensor 16 und der Flüssigkeitsoberfläche 14. Der zu messende Füllstand F ergibt sich dann aus der Differenz zwischen der bekannten Einbauhöhe E des Sensors über dem Behälterboden und dem Abstand D. Diese Art der Messung des Füllstands in einem Behälter nach dem Impulslaufzeitverfahren ist allgemein bekannt.

Der Sensor 16 enthält als wesentlichen Bestandteil einen Ultraschallwandler, der in der Lage ist, ein elektrisches Wechselspannungssignal in ein Ultraschallsignal und umgekehrt ein Ultraschallsignal in ein elektrisches Wechselspannungssignal umzuwandeln. Der Ultraschallwandler wird durch eine elektrische Wechselspannung, deren Frequenz vorzugsweise einer Eigenresonanzfrequenz des Ultraschallwandlers entspricht und an seine Anschlußklemmen angelegt wird, zu mechanischen Schwingungen mit seiner Eigenresonanzfrequenz angeregt, und er überträgt diese Schwingungen auf ein umgebendes Medium, in dem sich die Schwingungen als Ultraschallwellen fortpflanzen. Wenn umgekehrt Ultraschallwellen mit einer Eigenresonanzfrequenz des Ultraschallwandlers von dem umgebenden Medium auf den Ultraschallwandler übertragen werden, wird dieser wieder in mechanische Schwingungen mit seiner Eigenresonanzfrequenz versetzt, durch die eine Wechselspannung erzeugt wird, die an den Anschlußklemmen abgegeben wird.

Die üblichen Ultraschallwandler haben die folgende Eigenschaft: Wenn sie durch Anlegen eines elektrischen Wechselspannungsimpulses zu mechanischen Eigenresonanzschwingungen angeregt worden sind, hören diese nach dem Ende des elektrischen Wechselspannungsimpulses nicht sofort auf, sondern die Schwingungen klingen allmählich aus. Auch dieses Nachschwingen verursacht die Erzeugung einer elektrischen Wechselspannung, die an den Anschlußklemmen erscheint. Wenn sich somit die Flüssigkeitsoberfläche 14 so nahe an dem Sensor 16 befindet, daß der an der Flüssigkeitsoberfläche 14 reflektierte Echoimpuls noch während des Nachschwingens am Sensor 16 eintrifft, kann er nicht oder nur schwierig von dem durch das Nachschwingen erzeugten Wechselspannungssignal unterschieden werden. Es ist daher in der Regel vorgeschrieben, daß der maximale Füllstand im Behälter einen Mindestabstand vom Sensor einhalten muß; dieser Mindestabstand wird als "Blockdistanz" bezeichnet. Wenn der maximale Füllstand überschritten wird, liegt eine Überfüllung vor und es müssen besondere Maßnahmen getroffen werden, um die Überfüllung zu erkennen.

Die vorstehend geschilderten Probleme bestehen auch bei piezoelektrischen Ultraschallwandlern, wie sie heute bevorzugt angewendet werden. Fig. 2 zeigt den üblichen Aufbau eines solchen piezoelektrischen Ultraschallwandlers 20 in einer Schnittansicht. Er enthält einen piezoelektrischen Schwinger 22, der durch eine Scheibe 24 aus einem Piezokristall gebildet ist, auf deren beiden Seiten Metallisierungen 26 aufgebracht sind, die als Elektroden dienen und durch Leitungen 28 mit der Erregungs- und Auswerteschaltung 18 verbunden sind. Der piezoelektrische Schwinger 22 ist in einem Gehäuse 30 aus Metall oder Kunststoff untergebracht, dessen Boden 32 als Membran ausgebildet ist. Zwischen den piezoelektrischen Schwinger 22 und die Membran 32 ist eine Anpaßschicht 34 aus Kunststoff eingefügt, die den Zweck hat, die akustische Impedanz des piezoelektrischen Schwingers 22 an die Impedanz des Übertragungsmediums anzupassen. Der Kunststoff, aus dem die Anpaßschicht besteht, kann beispielsweise Silikon sein. Auf der der Membran 32 abgewandten Seite des piezoelektrischen Schwingers 22 ist das Innere des Gehäuses 30 ganz oder teilweise mit einer Vergußmasse 36 gefüllt, die den Zweck hat, die nach dieser Seite abgestrahlten Ultraschallwellen zu absorbieren oder zu dämpfen.

Wenn über die Leitungen 28 eine Wechselspannung an die Elektroden 26 angelegt wird, wird die Piezokristallscheibe 24 zu mechanischen Resonanzschwingungen mit einer ihrer Resonanzfrequenzen angeregt. Die mechanischen Resonanzschwingungen können Dickenschwingungen oder Radialschwingungen sein. Diese mechanischen Schwingungen werden über die Anpaßschicht 34 auf die Membran 32 übertragen und von dieser als Ultraschallwellen abgestrahlt. Wenn umgekehrt Ultraschallwellen auf die Membran 32 auftreffen, wird diese in mechanische Schwingungen versetzt, die über die Anpaßschicht 34 auf die Piezokristallscheibe 24 übertragen werden, die dadurch in mechanische Resonanzschwingungen versetzt wird. Durch diese Resonanzschwingungen wird zwischen den Elektroden 26 eine elektrische Wechselspannung erzeugt, die über die Leitungen 28 zu der Erregungs- und Auswerteschaltung übertragen wird.

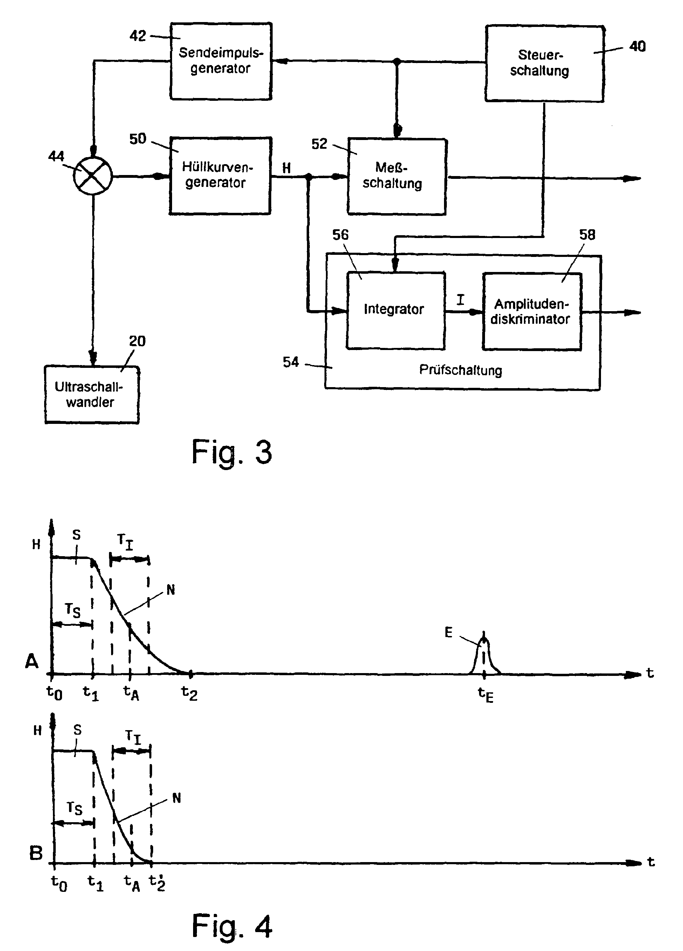

Fig. 3 zeigt ein vereinfachtes Blockschaltbild der Erregungs- und Auswerteschaltung 18. Der Ultraschallwandler 20 ist symbolisch durch einen Schaltungsblock dargestellt. Eine Steuerschaltung 40 steuert alle Funktionen der verschiedenen Schaltungsbestandteile. Insbesondere liefert die Steuerschaltung 40 periodische Auslöseimpulse zu einem Sendeimpulsgenerator 42, der bei jeder Auslösung einen elektrischen Wechselspannungsimpuls mit der Frequenz der auszusendenen Ultraschallwelle abgibt. Der Ausgang des Sendeimpulsgenerators 42 ist mit einer Sende-Empfangs-Weiche 44 verbunden, über die der Wechselspannungsimpuls an den Ultraschallwandler 20 angelegt wird.

Empfangsseitig ist der Ultraschallwandler 20 über die Sende-Empfangs-Weiche 44 mit dem Eingang einer Hüllkurvenschaltung 50 verbunden, die ein Hüllkurvensignal H abgibt, das der Hüllkurve aller vom Ultraschallwandler 20 abgegebenen Wechselspannungssignale entspricht. Das Hüllkurvensignal H wird dem Eingang einer Meßschaltung 52 zugeführt, die andererseits den den Sendezeitpunkt bestimmenden Auslöseimpuls von der Steuerschaltung 40 empfängt. Die Meßschaltung 52 ermittelt aus dem Hüllkurvensignal H den Echoimpuls, der an der Flüssigkeitsoberfläche 14 reflektiert worden ist, und sie mißt den Zeitabstand zwischen dem Sendezeitpunkt und dem Zeitpunkt des Eintreffens des Echoimpulses. Aus diesem Zeitabstand kann die Meßschaltung 52, wie oben erläutert, den Füllstand F berechnen.

Das Diagramm A von Fig. 4 zeigt die Hüllkurve der Signale in der Anordnung von Fig. 3 für den Fall der soeben erläuterten Füllstandsmessung. Der Rechteckimpuls S ist die Hüllkurve des vom Sendeimpulsgenerator 42 an den Ultraschallwandler 20 angelegten Wechselspannungsimpulses, der im Zeitpunkt to beginnt und im Zeitpunkt $t_1$ endet. Die Dauer $T_S$ vom Zeitpunkt $t_0$ bis zum Zeitpunkt $t_1$ ist das Sendezeitintervall. Der vom Ultraschallwandler 20 erzeugte Ultraschall-Sendeimpuls endet jedoch nicht abrupt im Zeitpunkt $t_1$, sondern er klingt infolge des Nachschwingens des Piezokristalls allmählich aus, wie durch den abfallenden Kurvenabschnitt N dargestellt ist, so daß er erst im Zeitpunkt $t_2$ endet. Die Nachschwingdauer von $t_1$ bis $t_2$ entspricht im wesentlichen der Blockdistanz. Sie ist verhältnismäßig lang, weil der Ultraschallwandler 20 in Luft schwingt und trotz der Anpaßschicht 34 die Ankopplung des Piezokristalls 24 an Luft schlecht ist, so daß dem Piezokristall die Schwingungsenergie nur langsam entzogen wird.

Im Zeitpunkt $t_E$ erscheint im Hüllkurvensignal H der Echoimpuls E, der an der Füllgutoberfläche 14 reflektiert worden ist. Die Meßschaltung 52 bestimmt den Zeitabstand zwischen dem Sendezeitpunkt $t_0$ und dem Empfangszeitpunkt $t_E$ und berechnet daraus den Füllstand F.

Das Diagramm B von Fig. 4 zeigt die Hüllkurve der Signale für den Fall einer Überfüllung, bei der der Sensor 16 zumindest mit seiner Membran 32 in die Flüssigkeit eintaucht. In diesem Fall wird natürlich kein Echoimpuls mehr empfangen. Ferner ist die Form des Ultraschall-Sendeimpulses verändert: Er klingt sehr viel schneller ab, weil dem Piezokristall 24 wegen der besseren Ankopplung an die Flüssigkeit die Schwingungsenergie schneller entzogen wird. Demzufolge fällt der durch das Nachschwingen verursachte Kurvenabschnitt N steiler ab, und der Zeitpunkt $t_2$', in dem die Nachschwingdauer beendet ist, liegt näher am Sendezeitpunkt $t_0$ als der Zeitpunkt $t_2$ im Fall des Diagrammes A.

Diese veränderte Kurvenform wird zum Erkennen einer Überfüllung ausgenutzt. Dies geschieht in der Anordnung von Fig. 3 durch eine Prüfschaltung 54, die parallel zur Meßschaltung 52 an den Ausgang des Hüllkurvengenerators 50 angeschlossen ist. Die Erkennung der Überfüllung kann auf verschiedene Weisen erfolgen.

Eine erste Lösung besteht darin, daß die Nachschwingdauer gemessen wird, die im Fall des Diagrammes A wesentlich länger als im Fall des Diagrammes B ist. Da es schwierig ist, den genauen Endzeitpunkt $t_2$ bzw. $t_2$' der Nachschwingdauer zu bestimmen, mißt man die Zeitdauer bis zu einem Zeitpunkt, in dem die Nachschwingamplitude auf einen vorbestimmten Wert abgefallen ist. Die Zeitmessung ist jedoch verhältnismäßig aufwendig.

Eine zweite Lösung besteht darin, daß die Nachschwingamplitude in einem bestimmten Zeitpunkt nach dem Sendezeitpunkt $t_0$ gemessen wird. Ein Vergleich der Diagramme A und B zeigt, daß im gleichen Zeitpunkt $t_A$ die Amplitude des abklingenden Nachschwingens im Fall des Diagrammes A wesentlich größer als im Fall des Diagrammes B ist. Die größere Amplitude zeigt an, daß keine Überfüllung besteht, während die kleinere Amplitude anzeigt, daß eine Überfüllung vorliegt. Bei dieser Art der Feststellung der Überfüllung besteht jedoch die Gefahr, daß sporadische Störimpulse, die sich der gemessenen Amplitude überlagern, eine falsche Anzeige ergeben.

Bei der Anordnung von Fig. 3 wird deshalb eine dritte Methode angewendet, die darin besteht, daß in einem Zeitfenster $T_I$, das nach dem Sendezeitintervall $T_S$ liegt, das Integral über die Nachschwingamplitude gebildet wird. Die Prüfschaltung 54 enthält zu diesem Zweck einen Integrator 56, dem das Ausgangssignal des Hüllkurvengenerators 50 zugeführt wird. Die Steuerschaltung 40 legt an einen Steuereingang des Integrators 44 ein Steuersignal an, das den Integrator 56 während der Dauer des Zeitfensters $T_I$ aktiviert. Der Integrator 56 gibt am Ausgang ein Signal I ab, das zu dem Integral der Nachschwingamplitude über die Zeitdauer $T_I$ proportional ist. Das Signal I wird einem Amplitudendiskriminator 58 zugeführt, dessen Ausgangssignal einen ersten Zustand annimmt, wenn das Signal I unter einem vorgegebenen Schwellenwert liegt, während es einen zweiten Zustand annimmt, wenn das Signal I den Schwellenwert übersteigt. Der erste Zustand des Ausgangssignals des Amplitudendiskriminators 56 zeigt eine Überfüllung an, während der zweite Zustand anzeigt, daß keine Überfüllung vorliegt.

Die Integration des Hüllkurvensignals in dem Zeitfenster $T_I$ erhöht die Sicherheit bei der Feststellung einer Überfüllung gegenüber einer einfachen Abtastung in einem Zeitpunkt $t_A$ ganz erheblich. Ein Vergleich der Diagramme A und B von Fig. 4 läßt erkennen, daß das Integral des Hüllkurvensignals im Zeitfenster $T_I$ im Fall des Diagrammes A ganz erheblich größer als im Fall des Diagrammes B ist, selbst wenn im letzten Fall sporadische Störungen im Zeitfenster $T_I$ auftreten sollten.

Die Anordnung von Fig. 3 läßt sich jedoch leicht für den Fall abändern, daß die Nachschwingamplitude in einem bestimmten Zeitpunkt $t_A$ abgetastet wird. Hierfür wird einfach der Integrator 56 durch eine Abtastschaltung ersetzt, die von der Steuerschaltung 40 so gesteuert wird, daß sie die Abtastung der Nachschwingamplitude im Zeitpunkt $t_A$ vornimmt. Der Abtastwert wird dann im Amplitudendiskriminator 58 mit einem entsprechenden Schwellenwert verglichen.

Jede der zuvor beschriebenen Auswertungen zum Erkennen einer Überfüllung beruht auf der unterschiedlichen akustischen Anpassung zwischen dem jeweils verwendeten Piezokristall und den Medien, in die die Schallenergie abzugeben ist, im vorliegenden Fall also einerseits Luft und andrerseits Flüssigkeit. Bezeichnet man mit $Z_A$ die akustische Impedanz der Anpaßschicht, mit $Z_M$ die akustische Impedanz des Mediums (Luft oder Flüssigkeit) und mit Zp die akustische Impedanz des Piezokristalls, dann sollte zur Erzielung einer guten akustischen Anpassung die akustische Impedanz $Z_A$ der Anpaßschicht die folgende Gleichung erfüllen:

$$Z_A = (Z_M \cdot Z_P)^{\frac{1}{2}}$$

Die akustische Impedanz Zp der herkömmlichen Piezokristalle, die üblicherweise für piezoelektrische Ultraschallwandler verwendet werden, wie Blei-Zirkonat-Titanat (PZT), beträgt etwa $35 \cdot 10^6$, und die akustischen Impedanzen $Z_A$ von handelsüblichen Kunststoffen, die für die Anpaßschicht geeignet sind, liegen zwischen $1,5 \cdot 10^6$ und $4,2 \cdot 10^6$. Da die akustische Impedanz $Z_M$ von Luft $0,0005 \cdot 10^6$ beträgt, ist es offensichtlich, daß eine gute akustische Anpassung an Luft nicht möglich ist. Zwar läßt sich mit den verfügbaren Anpaßschichtmaterialien die optimale Anpassung herkömmlicher Piezokristalle an die Flüssigkeit, beispielsweise an Wasser mit einer akustischen Impedanz von $1,5 \cdot 10^6$ ebenfalls nicht erzielen, doch ist die Anpassung an Flüssigkeiten erheblich besser als an Luft, wodurch sich der in den Diagrammen A und B von Fig. 4 dargestellte Unterschied im Nachschwingverhalten des Piezoschwingers ergibt, der zur Feststellung einer Überfüllung ausgenutzt wird. Dieser Unterschied ist umso deutlicher, je besser die Anpassung zwischen dem Piezokristall und der Flüssigkeit ist, denn desto schneller klingt das Nachschwingen des Piezoschwingers ab, wenn der Ultraschallwandler in die Flüssigkeit eintaucht. Für die beschriebene Feststellung einer Überfüllung wird daher eine möglichst gute Anpassung des Piezokristalls an die Flüssigkeit angestrebt.

Die Anpassung des Piezokristalls an die Flüssigkeit kann wesentlich verbessert werden, wenn ein piezoelektrischer Wandler verwendet wird, dessen Piezokristall aus einer porösen piezoelektrischen Keramik mit der Konnektivität 3-3 besteht.

Der Begriff der "Konnektivität" (englisch "connectivity") wurde von R. E. Newnham zur Kennzeichnung der Strukturen von mehrphasigen Feststoffen eingeführt und auch auf elektrokeramische Verbundwerkstoffe angewendet (R. E. Newnham "Composite Electroceramics", Ferroelectrics 1986, Vol. 68, S. 1-32). Die Konnektivität bezeichnet die Raumrichtungen in einem dreidimensionalen rechtwinkligen Koordinatensystem, in denen die Bestandteile jeder Phase miteinander durchgehend verbunden sind. Die Ziffer 0 bedeutet, daß die Bestandteile einer Phase in keiner Raumrichtung miteinander durchgehend verbunden sind, die Ziffer 1 bedeutet, daß die Bestandteile einer Phase in nur einer Raumrichtung miteinander durchgehend verbunden sind, usw. Die "Konnektivität 3-3" bedeutet, daß bei einem zweiphasigen Feststoff die Bestandteile jeder der beiden Phasen in allen drei Raumrichtungen miteinander durchgehend verbunden sind.

In dem Aufsatz "Dielectric, elastic and piezoelectric properties of porous PZT ceramics" von W. Wersing, K. Lubitz und J. Mohaupt in Ferroelectrics 1986, Vol. 68, S. 77-97, wird der Begriff der Konnektivität auch auf poröse Keramikwerkstoffe angewendet, die als zweiphasige Feststoffe angesehen werden, bei denen die eine Phase vom Keramikwerkstoff und die andere Phase von den Poren gebildet ist. Bei einer porösen Keramik mit der Konnektivität 3-3 sind also sowohl der Keramikwerkstoff als auch die Poren in allen drei Raumrichtungen miteinander durchgehend verbunden.

Für Piezokristalle aus einer solchen porösen Keramik läßt sich die oben angegebene Gleichung näherungsweise erfüllen, so daß die Anpassung an die Flüssigkeit noch wesentlich besser als für herkömmliche Piezokristalle ist. Demgemäß ist die Nachschwingdauer solcher Piezokristalle im eingetauchten Zustand, wie sie im Diagramm B von Fig. 4 dargestellt ist, noch deutlich kürzer als die Nachschwingdauer herkömmlicher Piezokristalle. Dagegen ergibt sich für die Anpassung an Luft bei Piezokristallen aus poröser Keramik kein wesentlicher Unterschied gegenüber herkömmlichen Piezokristallen. Somit ist bei Verwendung von piezoelektrischen Ultraschallwandlern, deren Piezokristall aus poröser Keramik der Konnektivität 3-3 besteht, die Feststellung einer Überfüllung auf Grund der unterschiedlichen Nachschwingdauer noch leichter und sicherer möglich.

**Patentansprüche**

1. Verfahren zur Feststellung einer Überfüllung bei der Messung des Füllstands einer Flüssigkeit in einem Behälter nach dem Impulslaufzeitverfahren mittels eines Ultraschallwandlers, der oberhalb des höchsten zulässigen Füllstands im Behälter montiert und so ausgebildet ist, daß er bei Erregung durch einen Wechselspannungsimpuls während eines Sendezeitintervalls einen Ultraschall-Sendeimpuls zur Füllgutoberfläche hin aussendet und in einem sich an das Sendezeitintervall anschließenden Empfangszeitintervall den an der Füllgutoberfläche reflektierten Ultraschall-Echoimpuls empfängt und in ein elektrisches Empfangssignal umwandelt, das an den Anschlüssen des Ultraschallwandlers abgegeben wird, wobei der Füllstand im Behälter aus der Laufzeit des Ultraschallimpulses vom Sendezeitpunkt des Ultraschall-Sendeimpulses bis zum Empfangszeitpunkt des Ultraschall-Echoimpulses ermittelt wird, **dadurch gekennzeichnet, daß** das durch das Nachschwingen des Ultraschallwandlers nach dem Ende des Wechselspannungsimpulses erzeugte abklingende Ausgangssignal des Ultraschallwandlers ausgewertet wird, um festzustellen, ob der Ultraschallwandler von der Flüssigkeit bedeckt ist oder nicht.

2. Verfahren nach Anspruch 1, **dadurch gekennzeichnet, daß** die Dauer des Nachschwingens des Ultraschallwandlers bis zum Abfall auf einen vorbestimmten Amplitudenwert mit einem vorgegebenen Zeitgrenzwert verglichen wird, der so bemessen ist, daß er unterschritten wird, wenn der Ultraschallwandler von der Flüssigkeit bedeckt ist.

3. Verfahren nach Anspruch 1, **dadurch gekennzeichnet, daß** die Nachschwingamplitude des Ausgangssignals des Ultraschallwandlers in einem vorbestimmten Zeitpunkt nach dem Ende des Wechselspannungsimpulses mit einem vorgegebenen Schwellenwert verglichen wird, der so bemessen ist, daß er unterschritten wird, wenn der Ultraschallwandler von der Flüssigkeit bedeckt ist.

4. Verfahren nach Anspruch 1, **dadurch gekennzeichnet, daß** die Nachschwingamplitude des Ausgangssignals des Ultraschallwandlers in einem vorbestimmten Zeitfenster nach dem Ende des Wechselspannungsimpulses integriert wird, und daß der Integrationswert mit einem vorgegebenen Schwellenwert verglichen wird, der so bemessen ist, daß er unterschritten wird, wenn der Ultraschallwandler von der Flüssigkeit bedeckt ist.

5. Anordnung zur Durchführung des Verfahrens nach einem der vorhergehenden Ansprüche, mit einem Ultraschallwandler, der oberhalb des höchsten zulässigen Füllstands in einem Behälter montierbar und so ausgebildet ist, daß er bei Erregung durch einen Wechselspannungsimpuls während eines Sendezeitintervalls einen Ultraschall-Sendeimpuls zur Füllgutoberfläche hin aussendet und in einem sich an das Sendezeitintervall anschließenden Empfangszeitintervall den an der Füllgutoberfläche reflektierten Ultraschall-Echoimpuls empfängt und in ein elektrisches Empfangssignal umwandelt, das an den Anschlüssen des Ultraschallwandlers abgegeben wird, und mit einer Erregungs- und Auswerteschaltung, die einen Sendeimpulsgenerator zum Anlegen eines Wechselspannungsimpulses an den Ultraschallwandler in jedem Sendezeitintervall und eine Meßschaltung zur Ermittlung der Laufzeit der Ultraschallimpulse aus den vom Ultraschallwandler gelieferten elektrischen Empfangssignalen und zur Berechnung des Füllstandes aus der ermittelten Laufzeit enthält, **dadurch gekennzeichnet, daß** die Erregungs- und Auswerteschaltung eine Prüfschaltung enthält, die das durch das Nachschwingen des Ultraschallwandlers nach dem Ende des Wechselspannungsimpulses erzeugte abklingende Ausgangssignal des Ultraschallwandlers auswertet, um festzustellen, ob der Ultraschallwandler von der Flüssigkeit bedeckt ist oder nicht.

6. Anordnung nach Anspruch 5, **dadurch gekennzeichnet, daß** die Prüfschaltung einen Integrator enthält, der das Ausgangssignal des Ultraschallwandlers während eines auf das Sendezeitintervall folgenden Zeitfensters integriert, sowie einen Amplitudendiskriminator, der den vom Integrator gelieferten Integrationswert mit einem Schwellenwert vergleicht, der so bemessen ist, daß er unterschritten wird, wenn der Ultraschallwandler von der Flüssigkeit bedeckt ist.

**7.** Anordnung nach Anspruch 5, **dadurch gekennzeichnet, daß** die Prüfschaltung eine Abtastschaltung enthält, die das Ausgangssignal des Ultraschallwandlers in einem nach dem Ende des Sendezeitintervalls liegenden Zeitpunkt abtastet, sowie einen Amplitudendiskriminator, der den von der Abtastschaltung gelieferten Abtastwert mit einem Schwellenwert vergleicht, der so bemessen ist, daß er unterschritten wird, wenn der Ultraschallwandler von der Flüssigkeit bedeckt ist.

**8.** Anordnung nach einem der Ansprüche 5 bis 7, **dadurch gekennzeichnet, daß** die Erregungs- und Auswerteschaltung einen Hüllkurvengenerator enthält, der die elektrischen Ausgangssignale des Ultraschallwandlers empfängt und am Ausgang ein die Hüllkurve dieser Ausgangssignale darstellendes Hüllkurvensignal abgibt, und daß die Meßschaltung und die Prüfschaltung an den Ausgang des Hüllkurvengenerators angeschlossen sind.

**9.** Anordnung nach einem der Ansprüche 5 bis 8, **dadurch gekennzeichnet, daß** der Ultraschallwandler einen piezoelektrischen Schwinger enthält.

**10.** Anordnung nach Anspruch 9, **dadurch gekennzeichnet, daß** der piezoelektrische Schwinger in einem Gehäuse untergebracht ist, dessen Boden als Membran ausgebildet ist, die mit dem piezoelektrischen Schwinger schwingungsmechanisch gekoppelt ist.

**11.** Anordnung nach Anspruch 10, **dadurch gekennzeichnet, daß** zwischen den piezoelektrischen Schwinger und die Membran eine Anpaßschicht eingefügt ist.

**12.** Anordnung nach Anspruch 11, **dadurch gekennzeichnet, daß** der piezoelektrische Schwinger aus einer porösen piezoelektrischen Keramik mit der Konnektivität 3-3 besteht.

## Claims

**1.** A method for overfill detection in liquid level sensing in a vessel by the pulse transit time technique by means of an ultrasonic transducer mounted above the highest-permissible level in the vessel and configured so that when said ultrasonic transducer is energized by an alternating voltage pulse it emits during a transmitting time interval an ultrasonic transmission pulse to the surface of the liquid and receives in a receiving time interval subsequent to the transmitting time interval the ultrasonic echo pulse reflected from the liquid surface and converts said ultrasonic echo pulse into an electrical detection signal which is output at the terminals of said ultrasonic transducer, the level in said vessel being detected from said transit time of said ultrasonic pulse from the point in time of emittance of said ultrasonic transmission pulse to the point in time of detecting said ultrasonic echo pulse wherein the decaying ultrasonic transducer output signal generated by the ringing of said ultrasonic transducer after the end of said alternating voltage pulse is analyzed to determine whether said ultrasonic transducer is covered by said liquid or not.

**2.** The method as set forth in claim 1, wherein the ringing duration of said ultrasonic transducer up to decay to a predetermined amplitude value is compared to a predetermined time limit value which is dimensioned so that it is fallen short of when said ultrasonic transducer is covered by said liquid.

**3.** The method as set forth in claim 1 wherein said ringing amplitude of said output signal of said ultrasonic transducer at a predetermined point in time after the end of said alternating voltage pulse is compared to a predetermined threshold value which is dimensioned so that it is fallen short of when said ultrasonic transducer is covered by said liquid.

**4.** The method as Set forth in claim 1 wherein said ringing amplitude of said output signal of said ultrasonic transducer is integrated in a predetermined time window after the end of said alternating voltage pulse and said integration value is compared to a predetermined threshold value which is dimensioned so that it is fallen short of when said ultrasonic transducer is covered by said liquid.

**5.** An assembly for implementing the method as set forth in any of the preceding claims comprising an ultrasonic transducer mountable above said highest-permissible level in said vessel and configured so that when said ultrasonic transducer is energized by an alternating voltage pulse it emits during a transmitting time interval an ultrasonic transmission pulse to said surface of said liquid and receives in a receiving time interval subsequent to said transmitting time interval said ultrasonic echo pulse reflected from said liquid surface and converts it into an electrical detection signal which is output at the terminals of said ultrasonic transducer, and an energizing/analyzer circuit containing a transmission pulse generator for applying an alternating voltage pulse to said ultrasonic transducer in every transmitting time interval, and a sensing circuit for sensing the transit time of said ultrasonic pulses from said electrical detection signals furnished by said ultrasonic transducer and for calculating said level from said sensed transit time wherein said energizing/analyzer circuit contains a test circuit which analyzes said decaying ultrasonic transducer output signal generated by the ringing of said ultrasonic transducer after the end of said alternating voltage pulse to determine whether said ultrasonic transducer is covered by said liquid or not.

6. The assembly as set forth in claim 5 wherein said test circuit contains an integrator which integrates the output signal of said ultrasonic transducer during a time window following said transmitting time interval, as well as an amplitude discriminator which compares the integration value furnished by said integrator to a threshold value which is dimensioned so that it is fallen short of when said ultrasonic transducer is covered by said liquid.

7. The assembly as set forth in claim 5 wherein said test circuit contains a sampling circuit which samples said output signal of said ultrasonic transducer at a point in time located after the end of said transmission time interval, as well as an amplitude discriminator which compares the sampled value furnished by said sampling circuit to a threshold value which is dimensioned so that it is fallen short of when said ultrasonic transducer is covered by said liquid.

8. The assembly as set forth in any of the claims 5 to 7 wherein said energizing/analyzer circuit contains an envelope generator which receives the electrical output signals of said ultrasonic transducer and outputs an envelope signal representing the envelope of these output signals and wherein said sensing circuit and said test circuit are connected to the output of said envelope generator.

9. The assembly as set forth in any of the claims 5 to 8 wherein said ultrasonic transducer contains a piezoelectric vibrator.

10. The assembly as set forth in claim 9 wherein said piezoelectric vibrator is accommodated in a housing, the bottom of which is configured as a diaphragm which is coupled to said piezoelectric vibrator by mechanical vibrations.

11. The assembly as set forth in claim 10 wherein an adapter film is inserted between said piezoelectric vibrator and said diaphragm.

12. The assembly as set forth in claim 11 wherein said piezoelectric vibrator consists of a porous piezo-crystal having the connectivity 3-3.

**Revendications**

1. Procédé destiné à la détermination d'un trop-plein lors de la mesure du niveau d'un liquide dans un réservoir d'après le procédé du temps de propagation d'impulsions au moyen d'un convertisseur ultrasonore, qui est monté à l'intérieur du réservoir, au-dessus du niveau maximal admissible, et est conçu de telle manière, qu'en cas d'excitation par une impulsion de tension alternative pendant un intervalle de temps d'émission, à émettre une impulsion d'émission ultrasonore en direction de la surface du produit et, dans l'intervalle de temps de réception consécutif à l'intervalle de temps d'émission, à recevoir l'impulsion d'écho ultrasonore réfléchie à la surface du produit et à convertir le signal de réception électrique, qui est délivré aux connexions du convertisseur ultrasonore, le niveau de remplissage du réservoir étant déterminé à partir du temps de propagation de l'impulsion ultrasonore entre l'instant d'émission de l'impulsion d'émission ultrasonore et l'instant de réception de l'impulsion d'écho ultrasonore, **caractérisé en que** le signal de sortie décroissant du convertisseur ultrasonore, généré par l'oscillation du convertisseur ultrasonore après la fin de l'impulsion de tension alternative, est exploitée afin de déterminer si le convertisseur ultrasonore est recouvert ou non par le liquide.

2. Procédé selon la revendication 1, **caractérisé en ce que** la durée de la post-oscillation du convertisseur ultrasonore, jusqu'à la chute à une valeur d'amplitude prédéterminée, est comparée avec un seuil de temps prédéfini, lequel est dimensionné de telle manière à être dépassé vers le bas lorsque le convertisseur ultrasonore est recouvert par le liquide.

3. Procédé selon la revendication 1, **caractérisé en ce que** l'amplitude de post-oscillation du signal de sortie du convertisseur ultrasonore est comparée en un instant prédéfini après la fin de l'impulsion de tension alternative avec une valeur seuil prédéfinie, laquelle est dimensionnée de telle manière à être dépassée vers le bas lorsque le convertisseur ultrasonore est recouvert par le liquide.

4. Procédé selon la revendication 1, **caractérisé en ce que** l'amplitude de post-oscillation du signal de sortie du convertisseur ultrasonore est intégrée dans une fenêtre de temps prédéfinie après la fin de l'impulsion de tension alternative, et que la valeur d'intégration est comparée avec une valeur seuil prédéfinie, laquelle est dimensionnée de telle manière à être dépassée vers le bas lorsque le convertisseur ultrasonore est recouvert par le liquide.

5. Configuration en vue de la réalisation du procédé selon l'une des revendications précédentes, avec un convertisseur ultrasonore, qui peut être monté au-dessus du niveau maximal admissible à l'intérieur d'un réservoir et est conçu de telle manière, qu'en cas d'excitation par une impulsion de tension alternative pendant un intervalle de temps d'émission, à émettre une impulsion d'émission ultrasonore en direction de la surface du produit et, dans l'intervalle de temps de réception consécutif à l'intervalle de temps d'émission, à recevoir l'impulsion d'écho ultrasonore réfléchie à la surface du produit et à convertir le signal de réception électrique, qui est délivré aux connexions du convertisseur ultrasonore, et avec un circuit d'excitation et d'exploitation, qui contient un générateur d'impulsions d'émission destiné à appliquer une impulsion de tension alternative au convertisseur ultrasonore à chaque intervalle de temps d'émission, et un circuit de mesure destiné à la détermination du temps de propagation des impulsions ultrasonores à partir des signaux de réception électriques délivrés par le convertisseur ultrasonore et au calcul du niveau de remplissage à partir du temps de propagation déterminé, **caractérisé en ce que** le circuit d'excitation et d'exploitation contient un circuit de contrôle, lequel exploite le signal de sortie décroissant du convertisseur ultrasonore, généré par l'oscillation du convertisseur ultrasonore après la fin de l'impulsion de tension alternative, afin de déterminer si le convertisseur ultrasonore est recouvert ou non par le liquide.

6. Configuration selon la revendication 5, **caractérisée en ce que** le circuit de contrôle contient un intégrateur, lequel intègre le signal de sortie du convertisseur ultrasonore pendant une fenêtre de temps consécutive à l'intervalle de temps d'émission, ainsi qu'un discriminateur d'amplitude, qui compare la valeur d'intégration fournie par l'intégrateur avec une valeur seuil, laquelle est dimensionnée de telle manière à être dépassée vers le bas lorsque le convertisseur ultrasonore est recouvert par le liquide.

7. Configuration selon la revendication 5, **caractérisée en ce que** le circuit de contrôle contient un circuit de détection, qui détecte le signal de sortie du convertisseur ultrasonore à un instant postérieur à la fin de l'intervalle de temps d'émission, ainsi qu'un discriminateur d'amplitude, qui compare la valeur de détection fournie par le circuit de détection avec une valeur seuil, laquelle est dimensionnée de telle manière à être dépassée vers le bas lorsque le convertisseur ultrasonore est recouvert par le liquide

8. Configuration selon l'une des revendications 5 à 7, **caractérisée en ce que** le circuit d'excitation et d'exploitation contient un générateur d'enveloppantes, qui reçoit les signaux de sortie électriques du convertisseur ultrasonore et délivre en sortie un signal d'enveloppante représentant l'enveloppante de ces signaux de sortie, et **en ce que** le circuit de mesure et le circuit de contrôle sont raccordés à la sortie du générateur d'enveloppantes.

9. Configuration selon l'une des revendications 5 à 8, **caractérisée en ce que** le convertisseur ultrasonore contient un oscillateur piézoélectrique.

10. Configuration selon la revendication 9, **caractérisée en ce que** l'oscillateur piézoélectrique est logé dans un boîtier, dont la partie inférieure est conçue sous forme d'une membrane, laquelle est couplée mécaniquement avec l'oscillateur piézoélectrique.

11. Configuration selon la revendication 10, **caractérisée en ce qu'**une couche d'adaptation est insérée entre l'oscillateur piézoélectrique et la membrane.

12. Configuration selon la revendication 11, **caractérisée en ce que** l'oscillateur piézoélectrique est constitué d'une céramique piézoélectrique poreuse avec la connectivité 3-3.

18 — Erregungs- und
Auswerteschaltung

16

10

14

12

D

E

F

## Fig. 1

28        28

20

30

36

22

26

24

34

26

32

## Fig. 2

42 Sendeimpuls-generator

40 Steuer-schaltung

44

50 Hüllkurven-generator

H

52 Meß-schaltung

56 Integrator

I

58 Amplituden-diskriminator

54 Prüfschaltung

20 Ultraschall-wandler

Fig. 3

H

S

$T_I$

$T_S$

N

E

A

$t_0$ $t_1$ $t_A$ $t_2$ $t_E$

t

H

S

$T_I$

$T_S$

N

B

$t_0$ $t_1$ $t_A$ $t_2'$

t

Fig. 4